# EUROPEAN PATENT APPLICATION

(11) **EP 4 664 548 A1**
(43) Date of publication of application: **17.12.2025**
(21) Application number: 24753221.1
(22) Date of filing: 31.01.2024
(51) Int. Cl.: H01M 4/134, H01M 4/13, H01M 4/62, H01M 10/052, H01M 10/0562

(54) **NEGATIVE ELECTRODE AND BATTERY USING SAME**

(30) Priority: 10.02.2023 JP 2023019422
(71) Applicant: Mitsui Mining & Smelting Co., Ltd., Shinagawa-ku Tokyo 141-8584 (JP)
(72) Inventor: INOUE, Daisuke, Ageo-shi, Saitama 362-0021 (JP)
(74) Representative: Novagraaf Technologies
(86) International application number: PCT/JP2024/003183
(87) International publication number: WO 2024/166778

(57) **Abstract**

Disclosed is a negative electrode including a negative electrode charge collector, and a negative electrode layer that is disposed on the negative electrode charge collector and contains solid electrolyte particles. The value of (D₉₀-D₁₀)/D₅₀ is less than 10.0, where D₁₀, D₅₀, and D₉₀ are defined as cumulative volume particle diameters of the solid electrolyte particles at cumulative volumes of 10 vol%, 50 vol%, and 90 vol% respectively, as measured according to a laser diffraction/scattering particle size distribution measurement method. The negative electrode contains no negative electrode active material. Preferably, a cumulative volume particle diameter D₉₅ of the solid electrolyte particles at a cumulative volume of 95 vol% as measured according to the laser diffraction/scattering particle size distribution measurement method is less than 65 µm.

## Description

### Technical Field

The present invention relates to a negative electrode and a battery using the same.

### Background Art

Secondary batteries have been gaining attention in recent years as part of efforts to prevent global warming by reducing CO₂ emission. Among such batteries, lithium-ion batteries have a high energy density and can easily be reduced in size and weight, and are thus widely used as power sources for mobile electronic devices such as laptop computers and mobile phones. Recent developments have also been made in high-power high-capacity lithium-ion batteries for use in electric and hybrid vehicles.

However, using lithium metal foil in a lithium-ion battery may lead to a drawback that battery performance may deteriorate due to poor contact between the solid electrolyte layer and the negative electrode, or due to the formation of an oxide film on the surface of the lithium metal foil. A lithium-free battery employing an in-situ plating-type negative electrode has been proposed, which uses LiCoO₂ as the positive electrode material and Lipon as the solid electrolyte and deposits lithium metal onto the charge collector without using lithium metal foil. However, the achievable battery capacity is around 0.1 mAh in terms of discharge current, which is insufficient.

To address this, Patent Literature 1 proposes increasing the discharge current by disposing a negative electrode, which includes a solid electrolyte layer containing solid electrolyte particles and having a voidage of 0.05 to 0.8, in opposition to a positive electrode, with the solid electrolyte layer interposed therebetween, thereby enabling good contact between the solid electrolyte layer and the negative electrode, even when lithium metal is deposited during charging.

### Citation List

### Patent Literature

Patent Literature 1: JP 2012-146553A

### Summary of Invention

However, in a battery having the negative electrode disclosed in Patent Literature 1, lithium metal is deposited in a dendritic manner, leading to frequent short-circuiting and poor product yield.

An objective of the present invention is to provide a negative electrode capable of inhibiting short-circuiting in a battery, particularly in a lithium-ion battery, and a battery including such a negative electrode.

The present Inventor has conducted in-depth studies to suppress short-circuiting in lithium-ion batteries, and has found that this problem can be solved by providing a negative electrode including solid electrolyte particles that satisfy predetermined conditions, in place of a conventional in-situ plating-type negative electrode, thus arriving at the present invention.

That is, the present invention provides a negative electrode comprising:
a negative electrode charge collector; and
a negative electrode layer that is disposed on the negative electrode charge collector and contains solid electrolyte particles, wherein

a value of (D₉₀-D₁₀)/D₅₀ is less than 10.0, where D₁₀, D₅₀, and D₉₀ are defined as cumulative volume particle diameters of the solid electrolyte particles at cumulative volume of 10 vol%, 50 vol%, and 90 vol% respectively, as measured according to a laser diffraction/scattering particle size distribution measurement method, and
the negative electrode contains no negative electrode active material.

The present invention also provides a battery comprising:
a negative electrode;
a positive electrode; and
a solid electrolyte layer disposed between the negative electrode and the positive electrode, wherein

the negative electrode comprises
   a negative electrode charge collector, and
   a negative electrode layer that is disposed on the negative electrode charge collector, contains solid electrolyte particles, and contains no negative electrode active material, and
a value of (D₉₀-D₁₀)/D₅₀ is less than 10.0, where D₁₀, D₅₀, and D₉₀ are defined as cumulative volume particle diameters of the solid electrolyte particles at cumulative volumes of 10 vol%, 50 vol%, and 90 vol% respectively, as measured according to a laser diffraction/scattering particle size distribution measurement method.

### Description of Embodiments

The present invention will be described below according to preferred embodiments thereof.

A negative electrode and a battery using this negative electrode according to the present invention can achieve the effect of enabling inhibition of short-circuiting. The specific reasons are as follows. First, the negative electrode of the present invention contains no negative electrode active material, but contains solid electrolyte particles. By using such a negative electrode in a battery, the lithium ions having moved from the positive electrode during charging are deposited as lithium metal, and the lithium metal functions as a negative electrode active material. This is a so-called in-situ plating-type negative electrode. A feature of the present invention is the use of solid electrolyte particles having cumulative volume particle diameters defined within predetermined ranges. In the present invention having such a feature, the growth of lithium metal crystals in a dendritic manner can be inhibited compared to conventional in-situ plating-type negative electrodes, and thus battery short-circuiting can be inhibited.

In the present invention, it is preferable that the growth of dendritic lithium metal can be inhibited to an extent that short-circuiting can be inhibited. In this way, it is possible to inhibit short-circuiting caused by dendritically-grown lithium metal penetrating the solid electrolyte layer and reaching the positive electrode layer. The specifically permissible extent of growth of dendritic lithium metal depends on the battery design, such as the thickness of the solid electrolyte layer disposed between the negative electrode and the positive electrode. For example, in the present invention, the permissible extent of growth of dendritic lithium metal, i.e., the permissible height of the projections on the surface of the negative electrode charge collector, is preferably a height that does not penetrate the solid electrolyte layer from the negative electrode side to the positive electrode side, and preferably 15 µm or less, more preferably 10 µm or less, even more preferably 8 µm or less. By keeping the height of the projections within the aforementioned range, battery short-circuiting can be inhibited effectively.

The negative electrode charge collector to be used in the negative electrode of the present invention can be constituted, for example, by a metal, such as stainless steel, gold, platinum, zinc, nickel, tin, aluminum, molybdenum, niobium, tantalum, tungsten, titanium, etc., or an alloy thereof. The thickness can be designed to be, for example, 1 µm or greater, preferably 3 µm or greater, more preferably 5 µm or greater. The thickness of the negative electrode charge collector may be 50 µm or less, preferably 30 µm or less, or 15 µm or less.

In the negative electrode of the present invention, when D₁₀, D₅₀, and D₉₀ are defined as cumulative volume particle diameters of the solid electrolyte particles at cumulative volumes of 10 vol%, 50 vol%, and 90 vol% respectively, as measured according to a laser diffraction/scattering particle size distribution measurement method, the value of (D₉₀-D₁₀)/D₅₀ of the solid electrolyte particles constituting the negative electrode layer needs to be less than 10.0, preferably less than 4.0, more preferably less than 3.8, even more preferably less than 2.2. (D₉₀-D₁₀)/D₅₀ is an index of sharpness of the particle size distribution of the particles, and the closer the value is to 0, the more uniform the particle size distribution of the particles is. When the particle size distribution of the particles is uniform, the voids formed between the solid electrolyte particles will become uniform, which enables the lithium (Li) ions having moved from the positive electrode during charging to be deposited within the voids as lithium metal. Thus, in contrast to conventional in-situ plating-type negative electrodes, the negative electrode of the present invention can inhibit dendritic growth of lithium (Li) crystals, and can thus inhibit short-circuiting in a battery including the negative electrode of the present invention.

The lower limit of the value of (D₉₀-D₁₀)/D₅₀ is not particularly limited, and may be greater than 0, or 0.5 or greater, or 0.8 or greater.

Measurement of the particle size distribution of the solid electrolyte particles by a laser diffraction/scattering particle size distribution measurement method can be performed, for example, according to the following procedure. An automatic sample delivery device ("Microtorac SDC" from Nikkiso Co., Ltd.) for a laser diffraction particle diameter distribution measurement device is used to supply 6 ml of a sample (slurry) to a nonaqueous solvent (toluene), and at a flow rate of 50%, ultrasonic waves at 30 W are applied for 60 seconds. Then, the particle size distribution is measured using, for example, a laser diffraction particle size distribution measurement device "MT3000II" from Nikkiso Co., Ltd., and the values of the respective cumulative volume particle diameters D₁₀, D₅₀, and D₉₀ at 10 vol%, 50 vol%, and 90 vol% can be measured from the obtained volume-based particle-size distribution chart.

At the time of measuring the particle size distribution, the nonaqueous solvent is used through a 60-µm filter. Measurement is performed twice according to the conditions set as follows: solvent refractive index: 1.50; particle transparency condition: transparent; particle refractive index: 1.59; shape: non-spherical; measurement range: 0.133 to 704.0 µm; measurement time: 10 seconds. The average value of the two measurements is found respectively as D₁₀, D₅₀, and D₉₀.

The sample (slurry) can be prepared by manually mixing 0.3 g of the solid electrolyte and 5.7 g of dispersion liquid (mass ratio of toluene to SN dispersant 9228 (from San Nopco) is 19:1).

In the present invention, in addition to the solid electrolyte particles having a specific particle size distribution, it is preferable that the cumulative volume particle diameter D₉₅ at a cumulative volume of 95 vol% as measured according to the laser diffraction/scattering particle size distribution measurement method is preferably less than 65 µm, more preferably 30 µm or less, even more preferably 10 µm or less. When the solid electrolyte particles have the aforementioned particle size distribution and also contain a minimal number of large particles, the size of voids between the solid electrolyte particles can be optimized, enabling lithium (Li) ions, which have moved from the positive electrode during charging as described above, to be efficiently deposited as lithium metal within the voids and thereby inhibiting dendritic growth of lithium metal. Thus, it is possible to prevent short-circuiting in batteries including the negative electrode of the present invention.

From the viewpoint of facilitating formation of appropriately-sized voids between the solid electrolyte particles, D₅₀ of the solid electrolyte particles is preferably 0.1 µm or greater, more preferably 0.3 µm or greater, even more preferably 0.5 µm or greater. Further, D₅₀ is preferably 15 µm or less, more preferably 10 µm or less, even more preferably 5 µm or less.

It is preferable that the BET specific surface area of the solid electrolyte particles is, for example, preferably 2 m²/g or greater, more preferably 3 m²/g or greater, even more preferably 4 m²/g or greater. Similarly, the BET specific surface area is preferably 30 m²/g or less, more preferably 20 m²/g or less, even more preferably 16 m²/g or less, further more preferably 10 m²/g or less. In this way, lithium (Li) ions, which have moved from the positive electrode side during charging, can be deposited more efficiently within the voids between the solid electrolyte particles, thereby inhibiting dendritic growth of lithium metal. Thus, it is possible to prevent short-circuiting in batteries including the negative electrode of the present invention.

The BET specific surface area is calculated according to the following method. Absorption-desorption isotherms are measured according to the constant volume gas adsorption method using a specific surface area measurement device "BELSORP- mini II" from MicrotracBEL Corp., and the BET specific surface area is calculated by multipoint measurement. Nitrogen is used for the gas.

To adjust the value of (D₉₀-D₁₀)/D₅₀ and the particle diameters of the solid electrolyte particles, the solid electrolyte particles may be subjected to a suitable grinding treatment. For example, solid electrolyte particles produced according to a known method may be coarsely ground with a ball mill etc., and then subjected to wet fine grinding, to adjust the particle size distribution and particle diameters. More specifically, solid electrolyte particles having the target particle size distribution can be obtained by controlling the grinding conditions for performing wet fine grinding, such as the grinding time, the rotation speed of the grinding device, the grinding media material, the particle size of the grinding media, the slurry concentration, the slurry feed amount, the mass ratio between the solid electrolyte particles and the grinding media, etc. Determination of such grinding conditions falls within the scope of common technical knowledge of a skilled person and can be determined without undue burden to the skilled person.

In the negative electrode of the present invention, the negative electrode layer is formed preferably by a coating method onto the negative electrode charge collector, and in this way, the solid electrolyte particles are not sintered together because they do not undergo firing and sintering.

Further, as described above, the negative electrode of the present invention contains no negative electrode active material. More specifically, the negative electrode layer in the negative electrode of the present invention does not contain a negative electrode active material, and also, the negative electrode charge collector does not contain a negative electrode active material. The negative electrode of the present invention does not contain a negative electrode active material until it is initially charged. On the other hand, after being initially charged, the lithium metal (Li) deposited on the negative electrode layer functions as the negative electrode active material. As a result, the negative electrode of the present invention functions as an in-situ plating-type negative electrode.

From the viewpoint of inhibiting the growth of dendritic lithium metal to an extent that short-circuiting can be inhibited, it is preferable that the solid electrolyte particles used in the negative electrode of the present invention include a lithium (Li) element, a sulfur (S) element, and an M element. Examples of the M element may preferably be at least one selected from phosphorus (P) element, germanium (Ge) element, antimony (Sb) element, silicon (Si) element, tin (Sn) element, aluminum (Al) element, titanium (Ti) element, iron (Fe) element, nickel (Ni) element, cobalt (Co) element, and manganese (Mn) element. Particularly, it is preferable that the M element includes at least a phosphorus (P) element, and more preferably, the M element consists only of a P element.

Examples of compounds including a Li element, a S element, and an M element may include Li₇PS₆, Li₇₊₃ₓ(P⁵⁺₁₋ₓFe²⁺ₓ)S₆, Li₇₊ₓ(P⁵⁺₁₋ₓSi⁴⁺ₓ)S₆, etc., which are compounds consisting only of Li, S, and M elements (in the formulas, x represents a number from 0.1 to 1.0). As compounds including Li, S, and M elements, it is also possible to use compounds that include other elements in addition to the above three elements. Examples of such other elements may include halogen (X) elements. By using a compound including an X element in addition to Li, S, and M elements, short-circuiting becomes even less prone to occur in a battery including the negative electrode of the present invention. As for the X element, it is possible to use at least one of element selected from fluorine (F), chlorine (Cl), bromine (Br), and iodine (I).

It is preferable that the compound including Li, S, M, and X elements is expressed by compositional formula (1), LiₐMS_{b}X_{c} (in the formula, M represents at least one of element selected from P, Ge, Sb, Si, Sn, Al, Ti, Fe, Ni, Co, and Mn; and X represents at least one of element selected from F, Cl, Br, and I), in terms that the growth of dendritic lithium metal can be inhibited to an extent that short-circuiting can be inhibited.

From the viewpoint of improving lithium-ion conductivity, it is preferable that, in the compositional formula (1), a is preferably 3.0 or greater, more preferably 3.5 or greater. On the other hand, a is preferably 9.0 or less, more preferably 8.0 or less. Particularly, in cases where the M element is a P element, the ratio of the number of atoms of Li element to P element, i.e., the value of a, is for example preferably 5.0 or greater, more preferably 5.5 or greater, even more preferably 6.0 or greater. On the other hand, a is, for example, preferably 8.0 or less, more preferably 7.8 or less, even more preferably 7.5 or less.

Further, b is preferably 4.0 or greater, more preferably 4.5 or greater, even more preferably 5.0 or greater. On the other hand, b is preferably 7.5 or less, more preferably 7.0 or less, even more preferably 6.5 or less.

Further, c is preferably 0.1 or greater, more preferably 0.2 or greater. On the other hand, c is preferably less than 2.0, more preferably less than 1.0, even more preferably 0.8 or less, further more preferably 0.6 or less.

Particularly, it is preferable that the M element in the aforementioned compositional formula (1) includes at least one selected from a P element, Ge element, Sb element, Sn element, and Si element, and more preferably includes a P element, and more preferably consists only of a P element. In this way, the growth of dendritic lithium metal can be inhibited to an extent that short-circuiting can be inhibited.

In cases where the M element is a P element, it is preferable that the value of c, which is the ratio of the number of atoms of X element to P element, is for example preferably 0.1 or greater, more preferably 0.2 or greater. On the other hand, the value of c is, for example, preferably less than 2.0, more preferably less than 1.0, even more preferably 0.8 or less, further preferably 0.6 or less. In cases where the M element is a P element, the ratio of the number of atoms of Li element to P element is, for example, preferably 5.0 or greater, more preferably 5.5 or greater, even more preferably 6.0 or greater. On the other hand, the ratio of the number of atoms of Li element to P element is, for example, preferably 9.0 or less, more preferably 8.0 or less, even more preferably 7.5 or less. Note that, in cases where the M element includes a P element and an element other than P, the ratio of the number of atoms of Li element to P element may be, for example, 20.0 or less, or 15.0 or less, or 9.0 or less.

It is preferable that the solid electrolyte particles are represented particularly by compositional formula (2), Li_{7-d}MS_{6-d}X_{d}, because the growth of dendritic lithium metal can be inhibited to an extent that short-circuiting can be inhibited. In cases where the M element is a P element, the value of d, which is the ratio of the number of atoms of X to P element, may be the same as the value of c described in the aforementioned compositional formula (1), so description thereof is omitted. Further, in cases where the M element is a P element, the ratio of the number of atoms of Li element to P element may be the same as that in the aforementioned compositional formula (1), so description thereof is omitted.

In cases where the M element in the aforementioned compositional formula (1) includes M1 and M2 elements which are different from each other, the composition of the solid electrolyte particles can be represented by Liₐ(M1_{1-y}M2_{y})S_{b}X_{c.} Further, in cases where the M element in the aforementioned compositional formula (2) includes M1 and M2 elements which are different from each other, the composition of the solid electrolyte particles can be represented by Li_{7-d}(M1_{1-y}M2_{y})S_{6-d}X_{d}. Herein, y is preferably 0.010 or greater, more preferably 0.020 or greater, even more preferably 0.050 or greater. On the other hand, y is preferably 0.70 or less, more preferably 0.40 or less, even more preferably 0.20 or less. Note that the M1 and M2 elements may be the same as the M elements described in the compositional formula (1), so description thereof is omitted.

The composition of the elements in the solid electrolyte particles can be measured, for example, by ICP optical emission spectrometry.

In addition to including the elements described above, it is preferable that the solid electrolyte particles include a crystal phase having an argyrodite-type crystal structure. In this way, lithium-ion conductivity can be further increased. Particularly, it is preferable that the solid electrolyte particles include a crystal phase having a cubic or orthorhombic argyrodite-type crystal structure. Whether a crystal phase having an argyrodite-type crystal structure is included or not can be determined by analyzing the solid electrolyte particles by X-ray diffractometry or X-ray total scattering. For the radiation source in X-ray diffractometry, it is possible to use Cu Kα radiation, such as Cu Kα1 radiation.

In cases where the solid electrolyte particles have a cubic argyrodite-type crystal structure, it is preferable that there are peaks at positions of 2θ = 25.19° ± 1.00° and 29.62° ± 1.00° in an X-ray diffraction pattern measured using Cu Kα1 radiation.

In cases where the solid electrolyte particles have a cubic argyrodite-type crystal structure, it is preferable that, in addition to the positions of 2θ = 25.19° ± 1.00° and 29.62° ± 1.00°, there are peaks at one or more positions selected from 2θ = 15.34° ± 1.00°, 17.74° ± 1.00°, 30.97° ± 1.00°, 44.37° ± 1.00°, 47.22° ± 1.00°, and 51.70° ± 1.00°, in an X-ray diffraction pattern measured using Cu Kα1 radiation, and more preferably at all of the positions of 2θ = 15.34° ± 1.00°, 17.74° ± 1.00°, 30.97° ± 1.00°, 44.37° ± 1.00°, 47.22° ± 1.00°, and 51.70° ± 1.00°, in addition to the positions of 2θ = 25.19° ± 1.00° and 29.62° ± 1.00°.

Further, in cases where the solid electrolyte particles have an orthorhombic argyrodite-type crystal structure, it is preferable that there are two peaks at the position of 2θ = 25.38° ± 1.00° and four peaks at 29.77° ± 1.00° in an X-ray diffraction pattern measured using Cu Kα1 radiation.

Further, in cases where the solid electrolyte particles have an orthorhombic argyrodite-type crystal structure, it is preferable that, in addition to the two peaks at the position of 2θ = 25.38° ± 1.00° and the four peaks at 29.77° ± 1.00°, there are peaks at one or more positions selected from 2θ = 15.40° ± 1.00° (two peaks), 17.86° ± 1.00° (two peaks), 31.25° ± 1.00° (two peaks), 44.40° ± 1.00° (four peaks), 47.20° ± 1.00° (four peaks), and 52.00° ± 1.00° (two peaks), in an X-ray diffraction pattern measured using Cu Kα1 radiation, and more preferably at all of the positions of 2θ = 15.40° ± 1.00° (two peaks), 17.86° ± 1.00° (two peaks), 31.25° ± 1.00° (two peaks), 44.40° ± 1.00° (four peaks), 47.20° ± 1.00° (four peaks), and 52.00° ± 1.00° (two peaks), in addition to the two peaks at the position of 2θ = 25.38° ± 1.00° and the four peaks at 29.77° ± 1.00°.

Note that, although the positions of the aforementioned peaks are described as the median value ± 1.00°, it may preferably be the median value ± 0.800°, more preferably the median value ± 0.500°.

The solid electrolyte particles may contain other materials or other components as necessary. Therefore, the solid electrolyte particles may consist of a single phase constituted by a crystal phase having an argyrodite-type crystal structure, or may include other phases in addition to this phase. For example, in addition to a crystal phase having an argyrodite-type crystal structure, the solid electrolyte particles may include a Li₂S phase, Li₃PS₄ phase, Li₄P₂S₆ phase, LiCl phase, LiBr phase, etc. Particularly, it is preferable that the solid electrolyte particles include a Li₂S phase in addition to a crystal phase having an argyrodite-type crystal structure, because lithium-ion conductivity is further increased. Note, however, that it is preferable that the solid electrolyte particles include, as a main material, a compound including Li, S, M, and X elements and including a crystal phase having an argyrodite-type crystal structure. Further, aside from the aforementioned other materials and other components, the solid electrolyte particles may include inevitable impurities in an amount that has minimal adverse influence on the effects of the present invention, such as less than 5 mass%, and more preferably around less than 3 mass%.

From the viewpoint of improving electron conductivity, i.e., electron conduction properties, it is preferable that the negative electrode of the present invention contains an electroconductive material in the negative electrode layer. Examples of electroconductive materials may include various metal materials and electroconductive non-metal materials. Either one of a metal material or an electroconductive non-metal material may be used, or both may be used in combination.

Examples of the metal materials may include various precious metal elements, such as gold (Au) element, silver (Ag) element, platinum (Pt) element, palladium (Pd) element, rhodium (Rh) element, iridium (Ir) element, ruthenium (Ru) element, and osmium (Os) element. Other examples may include various transition metal elements, such as copper (Cu) element, iron (Fe) element, and tin (Sn) element. One of the aforementioned metal element may be used singly, or two or more of the aforementioned metal elements may be used in combination.

As for the electroconductive non-metal materials, for example, carbon materials may be used. Examples thereof may include graphite, acetylene black, carbon black, carbon nanofibers, carbon nanotubes, nanographene, and fullerene nanowhiskers. One of the aforementioned carbon material may be used singly, or two or more of the aforementioned carbon materials may be used in combination. Among these carbon materials, using carbon black can further improve the initial capacity and discharge rate characteristics of the battery. From the viewpoint of further enhancing this advantage, it is preferable to use acetylene black or furnace black as carbon black, and among the above, it is preferable to use oil furnace black, and more preferably Ketjen black.

The electroconductive material preferably has a particulate form, and its particle diameter D1 may be, for example, preferably 1 nm or greater, more preferably 10 nm or greater, even more preferably 20 nm or greater. Further, D1 may be, for example, preferably 500 nm or less, more preferably 300 nm or less, even more preferably 200 nm or less. The particle diameter D1 of the electroconductive material may be the average particle size (the average value of at least 100 particles) of the Feret diameter as measured by directly observing the particles with a scanning electron microscope (SEM) or a transmission electron microscope (TEM).

It is preferable that the particle diameter D1 of the electroconductive material is smaller than the particle diameter (D₅₀) of the solid electrolyte particles.

It should be noted that in cases where, for example, the electroconductive material has a fibrous shape, like the aforementioned carbon nanotubes and carbon nanofibers, fiber diameter may be employed instead of particle diameter. The fiber diameter D2 may be, for example, preferably 50 nm or greater, more preferably 100 nm or greater, even more preferably 150 nm or greater. Further, D2 may be, for example, preferably 10000 nm or less, more preferably 5000 nm or less, even more preferably 2000 nm or less.

In the present invention, the solid electrolyte particles and the electroconductive material may be composited. Compositing of the solid electrolyte particles and the electroconductive material may be achieved, for example, by applying mechanical energy to the solid electrolyte particles and the electroconductive material particles. For this purpose, it is preferable to apply compression/impact force to the solid electrolyte particles and the electroconductive material in a mixed state, or apply shearing/friction force thereto. This compositing can inhibit an increase in viscosity of the slurry when forming the negative electrode, thereby enabling the solid electrolyte particles to be uniformly dispersed within the slurry and thus optimizing the size of the voids between the solid electrolyte particles.

To composite the solid electrolyte particles and the electroconductive material, which are in a mixed state, by applying mechanical energy such as compression/impact force or shearing/friction force, it is preferable to employ a device which is used mainly to subject powder to stirring, mixing, kneading, granulation, grinding, dispersion, surface modification, etc. For example, it is possible to use a planetary ball mill, a ball mill, a jet mill, a bead mill, an agitation pulverizer, a vibratory mill, a hammer mill, a roller mill, an atomizer, etc. The type of mechanical energy that can primarily be applied by using such devices differs depending on each device, and for example, in cases of using a planetary ball mill, primarily, compression/impact force can be applied to the solid electrolyte particles and the electroconductive material in a mixed state, to composite these materials. The centrifugal acceleration obtained during device rotation is not particularly limited, so long as the solid electrolyte particles and the electroconductive material can be composited, and may be, for example, preferably 10 G or greater, more preferably 15 G or greater, even more preferably 18 G or greater. Further, the centrifugal acceleration may be, for example, preferably 40 G or less, more preferably 30 G or less, even more preferably 25 G or less. When the centrifugal acceleration is within the aforementioned range, the solid electrolyte particles can easily be distributed uniformly within the negative electrode layer, thereby enabling further inhibition of short-circuiting in a battery.

It is preferable that, the expression "the solid electrolyte particles and the electroconductive material are 'composited'" means that the electroconductive material particles are dispersed inseparably in tight adhesion with the solid electrolyte particles on the surface or interior of the solid electrolyte particles. Examples of a "composited" state may include a state in which the electroconductive material particles are inseparably dispersed on the surface and/or in the interior of the solid electrolyte particles, and a state in which the solid electrolyte particles and the electroconductive material particles have bonded through a chemical reaction.

The expression "the electroconductive material particles are inseparably dispersed on the surface and/or in the interior of the solid electrolyte particles" means that, for example, when the solid electrolyte particles, with which the electroconductive material particles have been composited, are observed with an energy-dispersive X-ray spectrometer-equipped scanning electron microscope (SEM-EDS) and the constituent elements of the solid electrolyte (e.g., sulfur element) and the constituent elements of the electroconductive material are mapped, the constituent elements of the solid electrolyte and the constituent elements of the electroconductive material are present in an overlapping state. Alternatively, this may mean that, when a cross-section of a negative electrode layer including the solid electrolyte particles, with which the electroconductive material particles have been composited, is observed, the constituent elements of the solid electrolyte and the constituent elements of the electroconductive material are present in an overlapping state on the surface and/or in the interior of the solid electrolyte particles. Note that, the fact that "the solid electrolyte particles and the electroconductive material particles have composited through a chemical reaction" can be verified, for example, through the presence/absence of C-S bonds by Raman spectroscopy or photoelectron spectroscopy, in cases where the electroconductive material is a carbon material.

In the negative electrode of the present invention, it is preferable that the content of the electroconductive material is, for example, 1 part by mass or greater, more preferably 2 parts by mass or greater, even more preferably 5 parts by mass or greater, with respect to 100 parts by mass of the solid electrolyte. On the other hand, it is preferable that the content of the electroconductive material is, for example, 50 parts by mass or less, more preferably 20 parts by mass or less, even more preferably 15 parts by mass or less, further preferably 13 parts by mass or less, further more preferably 10 parts by mass or less, with respect to 100 parts by mass of the solid electrolyte.

The negative electrode can be produced, for example, through such methods as: preparing a slurry that contains solid electrolyte particles but does not contain a negative electrode active material, dropping the slurry onto a negative electrode charge collector, and then scraping the same with a doctor blade etc.; bringing the slurry into contact with a negative electrode charge collector, and then cutting the same with an air knife; or forming a coating film through screen printing etc., and then removing the solvent through heating/drying. The slurry is constituted by the solid electrolyte particles and a solvent. Examples of the solvent may include, although not limited to, nonpolar solvents such as heptane, methylcyclohexane, toluene, etc., aprotic polar solvents such as methyl isobutyl ketone, cyclohexanone, etc., and liquid mixtures thereof.

A battery including the negative electrode of the present invention may have a structure including, for example, a positive electrode, the aforementioned negative electrode, and a solid electrolyte layer disposed between the positive electrode and the negative electrode, i.e., may be a solid-state battery. More specifically, the negative electrode can be used in a solid-state lithium battery. The solid-state lithium battery may be a primary battery or a secondary battery, but it is preferable to use the negative electrode in a lithium secondary battery. "Solid-state battery" may encompass solid-state batteries that do not include any liquid-state substance or gel-state substance as an electrolyte, and may also encompass structures that contain, for example, 50 mass% or less, or 30 mass% or less, or 10 mass% or less, of a liquid-state substance or gel-state substance as an electrolyte. In this case, the negative electrode of the present invention contains no negative electrode active material. That is, the negative electrode functions as a so-called in-situ plating-type negative electrode, which does not contain a negative electrode active material at the time of initial charging but contains a negative electrode active material (lithium) after being initially charged.

In relation to the foregoing embodiments, the present invention further discloses the following negative electrodes and batteries.
{1} A negative electrode comprising:
   a negative electrode charge collector; and
   a negative electrode layer that is disposed on the negative electrode charge collector and contains solid electrolyte particles, wherein

   a value of (D₉₀-D₁₀)/D₅₀ is less than 10.0, where D₁₀, D₅₀, and D₉₀ are defined as cumulative volume particle diameters of the solid electrolyte particles at cumulative volumes of 10 vol%, 50 vol%, and 90 vol% respectively, as measured according to a laser diffraction/scattering particle size distribution measurement method, and
   the negative electrode contains no negative electrode active material.
{2} The negative electrode as set forth in clause {1}, wherein a cumulative volume particle diameter D₉₅ of the solid electrolyte particles at a cumulative volume of 95 vol% as measured according to the laser diffraction/scattering particle size distribution measurement method is less than 65 µm.
{3} The negative electrode as set forth in clause {1} or {2}, further including an electroconductive material.
{4} The negative electrode as set forth in any one of clauses {1} to {3}, wherein the solid electrolyte particles contain a lithium (Li) element, a sulfur (S) element, and an M element, wherein
   M comprises at least one selected from phosphorus (P), germanium (Ge), antimony (Sb), silicon (Si), tin (Sn), aluminum (Al), titanium (Ti), iron (Fe), nickel (Ni), cobalt (Co), and manganese (Mn).
{5} The negative electrode as set forth in clause {4}, wherein the solid electrolyte particles include a crystal phase having an argyrodite-type crystal structure.
{6} The negative electrode as set forth in clause {3}, wherein the electroconductive material is a carbon material or a metal material.
{7} The negative electrode as set forth in any one of clauses {1} to {6}, wherein lithium metal is depositable during charging.
{8} A battery comprising:
   a negative electrode;
   a positive electrode; and
   a solid electrolyte layer disposed between the negative electrode and the positive electrode, wherein

   the negative electrode comprises
      a negative electrode charge collector, and
      a negative electrode layer that is disposed on the negative electrode charge collector, contains solid electrolyte particles, and contains no negative electrode active material, and
   a value of (D₉₀-D₁₀)/D₅₀ is less than 10.0, where D₁₀, D₅₀, and D₉₀ are defined as cumulative volume particle diameters of the solid electrolyte particles at cumulative volumes of 10 vol%, 50 vol%, and 90 vol% respectively, as measured according to a laser diffraction/scattering particle size distribution measurement method.

### Examples

Hereinafter, the present invention will be described in greater detail using Examples. However, the scope of the present invention is not limited to the Examples below. Unless particularly stated otherwise, "%" means "mass%".

### Example 1

Li₂S powder, P₂S₅ powder, LiCl powder, and LiBr powder were used and were each measured such that the total amount was 75 g. Using a planetary ball mill (P-7 from Fritsch), the powders were automatically mixed and ground at a rotation speed of 600 rpm for 40 hours, to obtain a solid electrolyte having a composition of Li_{5.8}PS_{4.4}Br_{0.8}Cl_{0.8}. Then, the sample was pulverized in a mortar, and further ground with a ball mill. Thereafter, the sample was subjected to particle sizing using a sieve with a mesh opening of 53 µm, to obtain solid electrolyte particles having particle diameters D₁₀, D₅₀, and D₉₀ of 1.1 µm, 3.1 µm, and 6.8 µm, respectively. The particle diameter D₉₅ was 8.3 µm.

For the electroconductive material, acetylene black was used. The electroconductive material had a particle diameter D1 of 0.4 µm.

An electrode slurry containing the solid electrolyte particles, the electroconductive material and a solvent was prepared. More specifically, the solid electrolyte particles and the electroconductive material were added to a solvent at a mass ratio of 95:5 to prepare a slurry. The slurry was coated onto a stainless steel-made negative electrode charge collector by a doctor blade method to a thickness of 100 µm and was then dried, to produce a negative electrode.

All of the above operations were performed in a glove box purged with sufficiently dried Ar gas (dew point: -60°C or lower).

### Example 2

A negative electrode was produced in the same manner as in Example 1, except that the slurry was prepared by including the solid electrolyte particles and the electroconductive material at a mass ratio of 90:10.

### Example 3

A negative electrode was produced in the same manner as in Example 1, except that the particle diameters D₁₀, D₅₀, and D₉₀ of the solid electrolyte particles were 0.4 µm, 0.7 µm, and 1.3 µm, respectively.

### Comparative Example 1

A negative electrode was produced in the same manner as in Example 1, except that the slurry was prepared by including the solid electrolyte particles and the electroconductive material at a mass ratio of 85:15, and the particle diameters D₁₀, D₅₀, and D₉₀ of the solid electrolyte particles were 2.7 µm, 11.4 µm, and 172.3 µm, respectively, and the particle diameter D₉₅ was 225.7 µm.

### Evaluation of Solid Electrolyte Particles

For the solid electrolyte particles used in the Examples and Comparative Example, the particle size distribution, the particle diameters, and the BET specific surface area were measured according to the aforementioned methods. The results are shown in Table 1.

### Evaluation of Battery Short-Circuiting and Electron Conductivity

The aforementioned negative electrode was punched into a size of 25×25 mm. The punched-out negative electrode, a 25×25 mm solid electrolyte layer, and a 20×20 mm positive electrode were layered, and a pressure of 700 MPa was applied thereto by cold isostatic pressing (CIP), to produce an all-solid-state battery. For the solid electrolyte layer, the solid electrolyte in the respective Examples was used. For the positive electrode, an electrode made by forming a positive electrode layer containing NCM622 (LiNi_{0.6}Co_{0.2}Mn_{0.2}O₂) on an aluminum charge collector was used.

The obtained all-solid-state battery was subjected to charging/discharging under conditions wherein constant current-constant potential charging was performed at 25°C to 4.3 V at 0.1 C, and constant current discharging was performed to 2.5 V at 0.1 C, to check whether battery short-circuiting occurred or not. The termination current during charging was 0.05 C. The results are shown in Table 1.

**[Table 1]**

| | | Example 1 | Example 2 | Example 3 | Comparative Example 1 |
|---|---|---|---|---|---|
| Solid electrolyte | D₁₀ (µm) | 1.1 | 1.1 | 0.4 | 2.7 |
| | D₅₀ (µm) | 3.1 | 3.1 | 0.7 | 11.4 |
| | D₉₀ (µm) | 6.8 | 6.8 | 1.3 | 172.3 |
| | D₉₅ (µm) | 8.3 | 8.3 | 1.7 | 225.7 |
| | (D₉₀-D₁₀)/D₅₀ | 1.8 | 1.8 | 1.4 | 14.9 |
| | BET specific surface area (m²/g) | 5.7 | 5.7 | 13.5 | 0.7 |
| Electroconductive material | | Acetylene black | Acetylene black | Acetylene black | Acetylene black |
| Solid electrolyte content (mass%) | | 95 | 90 | 95 | 85 |
| Electroconductive material content (mass%) | | 5 | 10 | 5 | 15 |
| Presence/absence of short-circuiting | | Absent | Absent | Absent | Present |

The results of Table 1 clearly show that, in the batteries of the Examples produced by using the respective negative electrodes containing solid electrolyte particles having a specific particle size distribution, short-circuiting did not occur even when repeatedly subjected to charging/discharging. In contrast, in the battery of Comparative Example 1, short-circuiting occurred in the first charging/discharging.

### Industrial Applicability

As described in detail above, the present invention can provide a negative electrode capable of inhibiting short-circuiting in a battery, particularly in a lithium-ion battery, and a battery including such a negative electrode.

## Claims

1. A negative electrode comprising:
a negative electrode charge collector; and
a negative electrode layer that is disposed on the negative electrode
charge collector and contains solid electrolyte particles, wherein
a value of (D₉₀-D₁₀)/D₅₀ is less than 10.0, where D₁₀, D₅₀, and D₉₀ are defined as cumulative volume particle diameters of the solid electrolyte particles at cumulative volumes of 10 vol%, 50 vol%, and 90 vol% respectively, as measured according to a laser diffraction/scattering particle size distribution measurement method, and
the negative electrode contains no negative electrode active material.

2. The negative electrode according to claim 1, wherein a cumulative volume particle diameter D₉₅ of the solid electrolyte particles at a cumulative volume of 95 vol% as measured according to the laser diffraction/scattering particle size distribution measurement method is less than 65 µm.

3. The negative electrode according to claim 1 or 2, further comprising an electroconductive material.

4. The negative electrode according to claim 1 or 2, wherein the solid electrolyte particles contain a lithium (Li) element, a sulfur (S) element, and an M element, wherein
M comprises at least one selected from phosphorus (P), germanium (Ge), antimony (Sb), silicon (Si), tin (Sn), aluminum (Al), titanium (Ti), iron (Fe), nickel (Ni), cobalt (Co), and manganese (Mn).

5. The negative electrode according to claim 4, wherein the solid electrolyte particles include a crystal phase having an argyrodite-type crystal structure.

6. The negative electrode according to claim 3, wherein the electroconductive material is a carbon material or a metal material.

7. The negative electrode according to claim 1 or 2, wherein lithium metal is depositable during charging.

8. A battery comprising:
a negative electrode;
a positive electrode; and
a solid electrolyte layer disposed between the negative electrode and the positive electrode, wherein
the negative electrode comprises
a negative electrode charge collector, and
a negative electrode layer that is disposed on the negative electrode charge collector, contains solid electrolyte particles, and contains no negative electrode active material, and
a value of (D₉₀-D₁₀)/D₅₀ is less than 10.0, where D₁₀, D₅₀, and D₉₀ are defined as cumulative volume particle diameters of the solid electrolyte particles at cumulative volumes of 10 vol%, 50 vol%, and 90 vol% respectively, as measured according to a laser diffraction/scattering particle size distribution measurement method.
